## Europäisches Patentamt

## European Patent Office

## Office européen des brevets

(19)

(11) Veröffentlichungsnummer: **0 288 598**
**B1**

(12)

# EUROPÄISCHE PATENTSCHRIFT

(45) Veröffentlichungstag der Patentschrift:
24.10.90

(51) Int.-Cl.⁵: **B23K 7/00**

(21) Anmeldenummer: 87110649.8

(22) Anmeldetag: 23.07.87

(54) Brennschneidtisch.

(30) Priorität: 28.04.87 DE 8706081 U

(43) Veröffentlichungstag der Anmeldung:
02.11.88 Patentblatt 88/44

(45) Bekanntmachung des Hinweises auf die Patenterteilung:
24.10.90 Patentblatt 90/43

(84) Benannte Vertragsstaaten:
AT BE CH DE ES FR GB GR IT LI LU NL SE

(56) Entgegenhaltungen:
EP-A- 0 213 235
DE-A- 2 703 702
DE-U- 7 516 190
US-A- 4 067 556

(73) Patentinhaber: Ludscheidt GmbH, Hildebrandstrasse 19,
D-4600 Dortmund 13(DE)

(72) Erfinder: Ludscheidt, Horst, Franz-Lehar-Strasse 6,
D-4600 Dortmund13(DE)

(74) Vertreter: Patentanwälte Meinke und Dabringhaus
Dipl.-Ing. J. Meinke Dipl.-Ing. W. Dabringhaus,
Westenhellweg 67, D-4600 Dortmund 1(DE)

**Beschreibung**

Die Erfindung richtet sich auf einen Brennschneidtisch der im Anspruch 1 angegebenen Gattung.

Ein derartiger Brennschneidtisch ist beispielsweise aus der EP-A1 0 213 235 der Anmelderin bekannt. Dabei ist der Saugwagen an am Brennschneidtisch oben angeordneten Hängeschienen verfahrbar ausgebildet. Innerhalb des Tischrahmens angeordnete Schienen zeigt z.B. auch die CH-A5 616 101.

Es hat sich gezeigt, daß die am Tisch angeordneten Schienen und die entsprechende Verfahrkonstruktion gewisse Nachteile aufweist. Insbesondere müssen besondere Vorkehrungen dafür getroffen werden, die Saugtrichter von eingefallener Asche, Brennrückständen und Schrott zu leeren, da die Saugwagen nicht nach außerhalb der Tischflächen verfahrbar sind, es sei denn, man würde einen besonderen Schienentotraum in Kauf nehmen, was die Tischkonstruktion in erheblichem Maße vergrößern und damit unwirtschaftlich machen würde.

Aus der DE-A1 2 703 702 ist ebenfalls eine gattungsbildende Vorrichtung bekannt geworden, bei der zusätzlich der Saugwagen an einem teleskopierbaren Saugrohr angeordnet ist und über kurze, vom teleskopierbaren Rohr zugelassene Wege schienenfahrbar unterhalb des Arbeitstisches angeordnet ist. Die von einer derartigen Vorrichtung zu befahrende Fläche ist zwangsläufig vergleichsweise gering, da der Teleskopierbarkeit von Saugrohren Grenzen gesetzt sind.

Aufgabe der Erfindung ist die Schaffung einer Lösung, mit der Brenntische in ihrer Baugröße nicht nur den jeweiligen Erfordernissen anpaßbar gestaltet werden können, sondern mit der gleichzeitig Verbesserungen der Absaugleistung und der Handhabung der Auffang- und Absaugvorrichtung erreichbar sind.

Mit einem Brennschneidtisch der eingangs bezeichneten Art wird diese Aufgabe gemäß der Erfindung dadurch gelöst, daß der Saugwagen mit einem auf Auflagerschultern ruhenden, herausnehmbaren Schrottbehälter ausgerüstet ist, wobei im Auflagebereich des Schrottbehälters der Saugwagen doppelwandig ausgebildet ist und wenigstens an den Längsseiten mit Ansaugschlitzen für die abzusaugenden Gase ausgerüstet ist, wobei die Saugkanäle des Saugwagens durch die Innenflächen des Saugwagens einerseits und die Außenflächen des eingesetzten Schrottbehälters andererseits gebildet sind.

Es hat sich gezeigt, daß diese Gestaltung von besonderem Vorteil insofern ist, als einmal der Schrottbehälter ohnehin entleerbar gestaltet sein muß, er wird daher zweckmäßig aushebbar sein, andererseits kann man die Gestaltung dieses Schrottbehälters relativ zum sonstigen Gehäuse des Saugwagens so gestalten, daß optimale Ansaugkanäle entstehen.

Die Erfindung sieht auch vor, daß die Saugschlitze umlaufend im Auflagebereich des Schrottbehälters vorgesehen sind. Eine seitliche Zufuhr über Sprühschlitze von Wasser am oberen Rand eines Schrottauffangbehälters zur Erzeugung eines Wasserschleiers zeigt die DD-A 204 868.

Die Erfindung ist nachstehend anhand der Zeichnung beispielsweise näher erläutert, diese zeigt in

Fig. 1 eine vereinfachte Seitenansicht des Brennschneidtisches nach der Erfindung,
Fig. 2 einen Schnitt etwa nach Linie II–II in Fig. 1 durch den Saugwagen,
Fig. 3 eine räumliche Explosionsdarstellung des Gehäuses des Saugwagens mit herausgenommenem Schrottbehälter sowie in
Fig. 4 in räumlicher Darstellung den Saugwagen teilweise aufgebrochen.

Der allgemein mit 1 bezeichnete Brennschneidtisch ist mit auf Stützen 2 gelagerten Traversen 3 versehen, auf denen Rostlamellen 4 angeordnet sind, die das zu schneidende Werkstück 5 tragen, was in der Zeichnung lediglich angedeutet ist. Unterhalb der Tischebene ist ein Saugwagen 6 auf einem Fahrgestell 7 angeordnet, welches aus zwei Achsen 8 mit je zwei Laufrädern 9 besteht, von denen eine mit einem nur andeutungsweise wiedergegebenen Antrieb 10 über ein Getriebe 11 in Verbindung steht.

Beidseitig ist unterhalb der Tischebene an den Stützen 2 je ein Saugkanal 12 angeordnet, wobei die Saugkanäle im dargestellten Beispiel als Schlitzkanäle ausgebildet sind. Die mit 13 bezeichneten Saugstutzen greifen dort ein. Angedeutet ist im übrigen noch, daß am Tisch Steuerketten 14 und z.B. Stromschienen 15 angeordnet sind, um eine Steuerung und Positionierung des Saugwagen 6 zu ermöglichen.

Die Laufräder 9 sind auf sogenannten Kranschienen 16 geführt, was bedingt, daß die gesamte Fahrgestellkonstruktion ein sehr geringes Höhenbaumaß aufweist, so daß insgesamt eine sehr geringe Bauhöhe erreichbar ist.

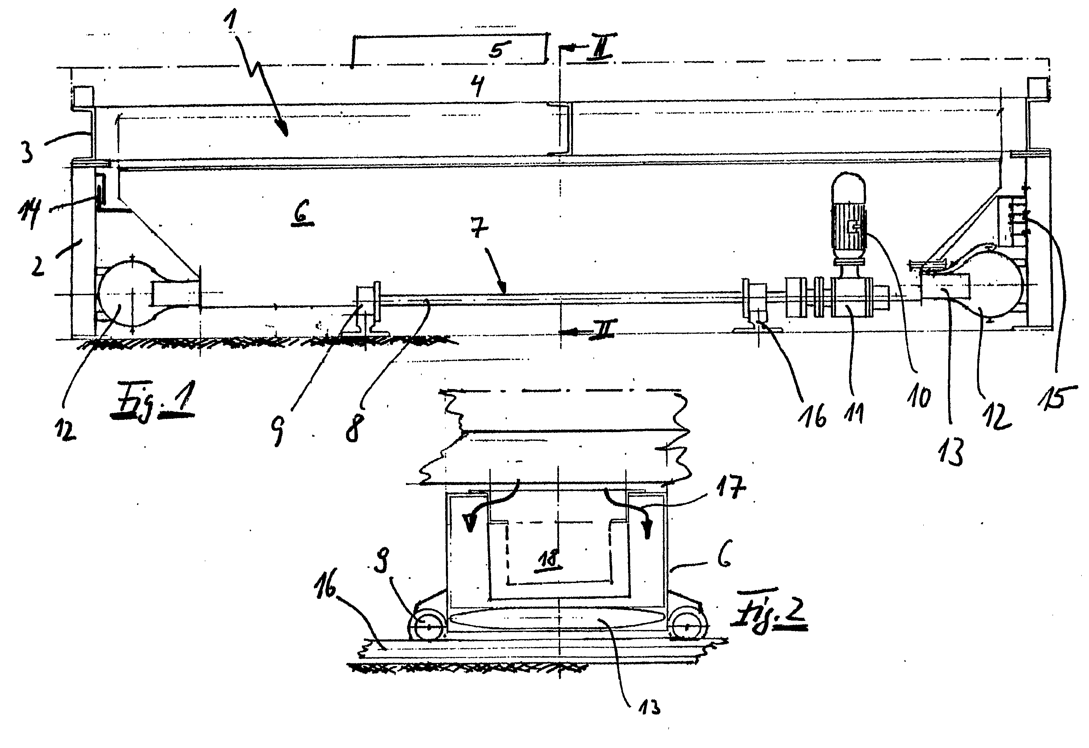

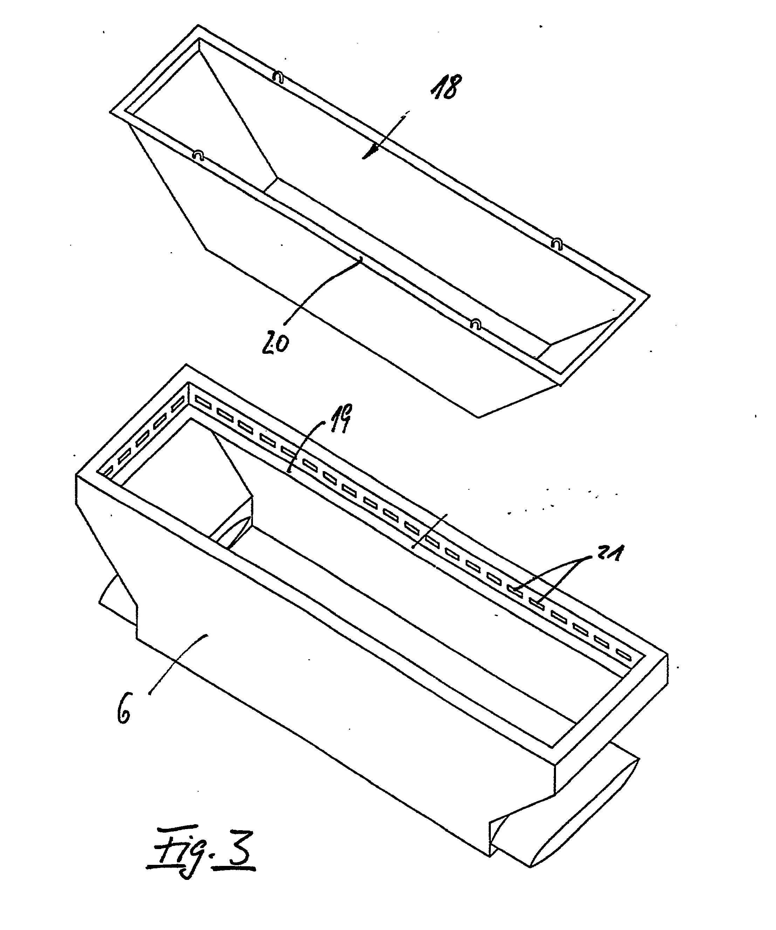

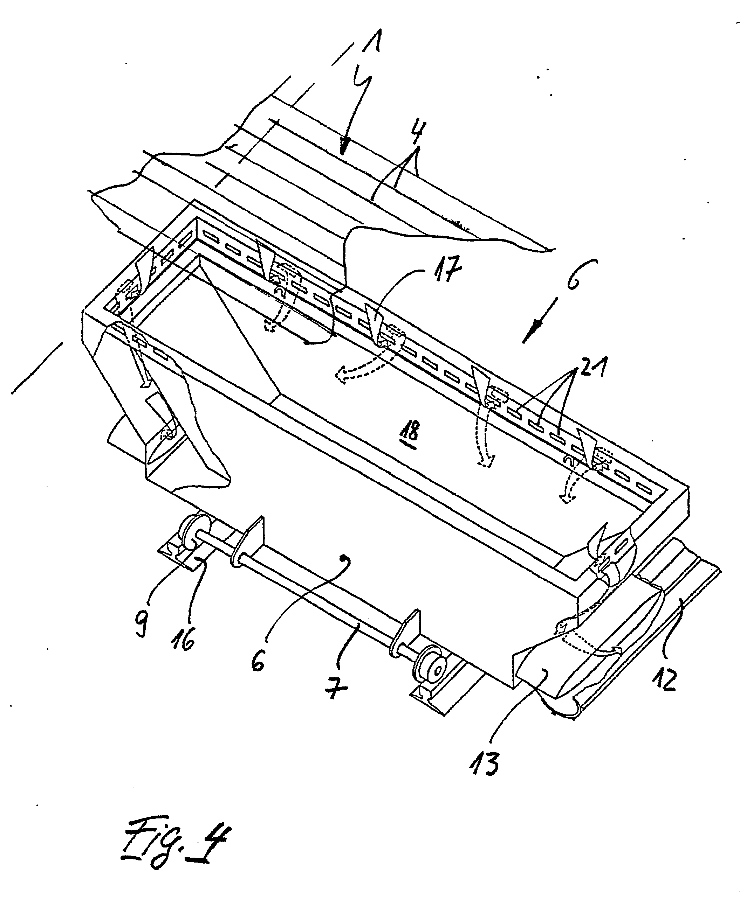

Wie sich insbesondere aus Fig. 3 ergibt, weist der Saugwagen 6 in seinem oberen Randbereich zur Aufnahme eines herausnehmbaren Schrottbehälters 18 eine umlaufende Auflageschulter 19 auf, auf der ein entsprechender oberer Rand 20 des Schrottbehälters 18 in der Verschlußlage aufliegt. Die Randabstände zwischen der Außenwand des Schrottbehälters 18 einerseits und der Innenwand des Saugwagens 6 andererseits bilden die Saugkanäle für die abzusaugenden Schadstoffe, was durch die Pfeile 17 (Fig. 2 bzw. Fig. 4) angedeutet ist. Um das Einsaugen zu ermöglichen, ist im Auflagebereich des Schrottbehälters 18 der Saugwagen 6 doppelwandig ausgebildet und mit einer Vielzahl von Ansaugschlitzen 21 versehen.

Die Einbaulage ist in Fig. 4 dargestellt, aus der sich die Gasführung durch die Pfeile 17 ergibt. Die Schadstoffe werden durch die Saugschlitze 21 angesaugt. Der nötige Unterdruck entsteht durch die gewählte Form der miteinander korrespondierenden Elemente 6 und 18. Die seitlichen Saugkanäle 12, in denen die Saugstutzen 13 geführt sind saugen dann über entsprechende, nicht näher dargestellte Gebläse die Schadstoffe ab.

Es können auch andere Kanalkonstruktionen vorgesehen sein. Das Fahrgestell 7 kann mit zwei getrennten Antrieben ausgerüstet sein, neben einem eigenen Fahrantrieb kann auch ein Kettenantrieb oder dgl. mit zur Tischkonstruktion gehören.

## Patentansprüche

1. Brennschneidtisch (1) mit einem Auflagerost (4) für die zu schneidenden Metallplatten und einer Auffangvorrichtung (18) für Abfälle und zum Absaugen der beim Brennschneiden entstehenden Gase als unterhalb des Auffangrostes (4) schienengebunden verfahrbarer Saugwagen (6), dessen Absaugstutzen (13) an einem stationär unterhalb des Brennschneidtisches (1) angeordneten Absaugkanal (12) endet, wobei der Saugwagen (6) mittels eines im Bereich seines unteren Endes angeordneten Fahrgestelles (7) auf unterhalb der Brenntischebene getrennt hiervon montierten Kranschienen (16) verfahrbar ausgebildet ist, dadurch gekennzeichnet, daß der Saugwagen (6) mit einem auf Auflagerschultern (19) ruhenden, herausnehmbaren Schrottbehälter (18) ausgerüstet ist, wobei im Auflagebereich des Schrottbehälters (18) der Saugwagen (6) doppelwandig ausgebildet ist und wenigstens an den Längsseiten mit Ansaugschlitzen (21) für die abzusaugenden Gase ausgerüstet ist, wobei die Saugkanäle des Saugwagens (6) durch die Innenflächen des Saugwagens (6) einerseits und die Außenflächen des eingesetzten Schrottbehälters (18) andererseits gebildet sind.

2. Brennschneidtisch nach Anspruch 1, dadurch gekennzeichnet, daß die Saugschlitze (21) umlaufend am Auflagebereich des Schrottbehälters (18) vorgesehen sind.

## Claims

1. Flame cutting table (1), having a support grate (4) for the metal plates to be cut and a collecting device (18) for the scrap and for extracting the gases produced during flame cutting in the form of an extractor carriage (6) drivable on rails below the collecting grate (4), the suction nozzle (13) of the carriage ending at a suction channel (12) disposed stationarily below the flame cutting table (1), the extractor carriage (6) being formed so as to travel, by means of a bogie (7) mounted in the region of its lower end on crane rails (16) mounted below the plane of the flame cutting table, separately therefrom, characterised in that the extractor carriage (6) is equipped with a removable swarf container (18) resting on support shoulders (19), the extractor carriage (6) having double walls in the support region of the swarf container (18) and being equipped at least at the longitudinal sides with extraction slots (21) for the gases to be discharged, the suction channels of the extractor carriage (6) being formed on the one side by the inner faces of the extractor carriage (6) and on the other side by the outer faces of the inserted swarf container (18).

2. Flame cutting table according to claim 1, characterised in that the extraction slots (21) are provided continuously around the support region of the swarf container (18).

## Revendications

1. Table (1) de découpage à la flamme, comprenant un caillebotis (4) de support des plaques métalliques à découper, ainsi qu'un dispositif (18) de recueillement du rebut et d'évacuation, par aspiration, des gaz engendrés lors de l'oxycoupage, revêtant la forme d'un chariot d'aspiration (6) qui est mobile avec assujettissement à des rails, au-dessous du caillebotis récepteur (4), et dont le manchon d'aspiration (13) s'achève dans un canal d'aspiration, (12) occupant une position fixe au-dessous de la table (1) de découpage à la flamme, le chariot d'aspiration (6) étant réalisé avec mobilité, au moyen d'un châssis (7) installé au voisinage de son extrémité inférieure, sur des rails de grutage (16) montés séparément audessous du plan de la table de découpage, caractérisée par le fait que le chariot d'aspiration (6) est équipé d'un réceptacle amovible (18) à rebut, reposant sur des décrochements d'appui (19), le chariot d'aspiration (6) étant réalisé à double paroi dans la zone d'appui du réceptacle (18) à rebut, et étant muni, au moins sur les côtés longitudinaux, de fentes (21) d'aspiration des gaz à évacuer par aspiration, les canaux d'aspiration du chariot d'aspiration (6) étant formés, d'une part, par les surfaces internes dudit chariot d'aspiration (6) et, d'autre part, par les surfaces externes du réceptacle (18) à rebut incorporé.

2. Table de découpage à la flamme selon la revendication 1, caractérisée par le fait que les fentes d'aspiration (21) sont prévues périphériquement dans la zone d'appui du réceptacle (18) à rebut.

EP 0 288 598 B1

Fig. 1

Fig. 2

_Fig. 3_

Fig. 4